# EUROPEAN PATENT SPECIFICATION

(11) **EP 1 388 975 B1**
(45) Date of publication and mention of the grant of the patent: **02.07.2008**
(21) Application number: 03017764.6
(22) Date of filing: 04.08.2003
(51) Int. Cl.: H04L 12/40, H04B 10/20, G06F 13/38

(54) **System and method for data transition control in a multirate communication system**
System und Verfahren zur Datenflankensteuerung bei Kommunikation mit mehrfachen Übertragungsraten
Système et procédé pour le contrôle des transitions des données d'une communication multi-débits

(30) Priority: 07.08.2002 US 402092 P; 29.10.2002 US 282849
(43) Date of publication of application: 11.02.2004
(73) Proprietor: Broadcom Corporation, Irvine, CA 92617 (US)
(72) Inventor: Hoang, Tuan, 92656 Westminster California (US); Hongtao Jiang, 92801 Anaheim, California (US)
(74) Representative: Jehle, Volker Armin

(56) References cited:
- EP-A- 0 994 422
- GB-A- 2 371 647
- US-A- 6 055 597
- US-B1- 6 345 310

## Description

### BACKGROUND OF THE INVENTION

The present invention relates to a data transition circuit for formatting data and to a method of formatting data.

High-speed digital communication networks over copper and optical fiber are used in many network communication and digital storage applications. Ethernet and Fiber Channel are two widely used communication protocols, which continue to evolve in response to increasing need for higher bandwidth in digital communication systems. The Open Systems Interconnection (OSI) model (ISO standard) was developed to establish standardization for linking heterogeneous computer and communication systems. It describes the flow of information from a software application of a first computer system to a software application of a second computer system through a network medium.

The OSI model has seven distinct functional layers including Layer 7: an application layer; Layer 6: a presentation layer; Layer 5: a session layer; Layer 4: a transport layer; Layer 3: a network layer; Layer 2: a data link layer; and Layer 1: a physical layer. Importantly, each OSI layer describes certain tasks that may be necessary for facilitating the transfer of information through interfacing layers and ultimately through the network. Notwithstanding, the OSI model does not describe any particular implementation of the various layers.

OSI layers 1 to 4 generally handle network control and data transmission and reception. Layers 5 to 7 handle application issues. Specific functions of each layer may vary depending on factors such as protocol and interface requirements or specifications that are necessary for implementation of a particular layer. For example, the Ethernet protocol may provide collision detection and carrier sensing in the physical layer. Layer 1, the physical layer, is responsible for handling all electrical, optical, opto-electrical and mechanical requirements for interfacing to the communication media. Notably, the physical layer may facilitate the transfer of electrical signals representing an information bitstream. The physical layer may also provide services such as, encoding, decoding, synchronization, clock data recovery, and transmission and reception of bit streams. In high bandwidth applications having transmission speeds of the order of Gigabits, high-speed electrical, optical and/or electro-optical transceivers may be used to implement this layer.

As the demand for higher data rates and bandwidth continues to increase, equipment capable of handling transmission rates of the order of 10 Gigabits and higher is being developed for high-speed network applications. Accordingly, there is a need to develop a 10 Gigabit physical layer device that may facilitate such high-speed serial data applications. For example, XENPAK multi-source agreement (MSA) defines a fiber optical module that conforms to the well-known IEEE standard for 10 Gigabit Ethernet (GbE) physical media dependent (PMD) types. In this regard, XENPAK compatible transceivers may be used to implement the physical layer. Notwithstanding, there is a need for transceivers, which are necessary for implementing 10 Gigabit physical layer applications. The well-known IEEE P802.3ae draft 5 specifications describes the physical layer requirements for 10 Gigabit Ethernet applications and is incorporated herein by reference in its entirety.

An optical-based transceiver, for example, may include various functional components which may implement tasks such as clock data recovery, clock multiplication, serialization/ de-serialization, encoding/decoding, electrical/optical conversion, descrambling, media access control (MAC), controlling, and data storage.

In certain operations of high-speed transceivers, the clock rate at which data may be transmitted may have to be changed to either a higher or a lower clock rate in order to meet certain bandwidth requirements. For example, in a case where the bus width used to transmit data decreases from, for example 64 bits wide to 32 bits wide, the clock rate may have to be altered in order to main certain requirements. In this regard, the data clock rate may have to be increased by a factor of two (2) in order to maintain a constant data throughput. In existing systems, this may require that the two resulting clock signals, along with an enable signal, be synchronized. Accordingly, the edges of both clock signals, such as a first clock signal and a second clock signal, and the enable signal may have to be aligned as closely as possible. Significant system resources may have to be dedicated towards synchronizing these signals. Some existing systems attempt to synchronize the signals by placing delay buffers in the paths of the clock signals and enable signals. The delay buffers may attempt to ensure that the clock signals and enable signals are in phase by adding delay to one or more of the signals requiring synchronization.

Further limitations and disadvantages of conventional and traditional approaches will become apparent to one of skill in the art, through comparison of such systems with some aspects of the present invention as set forth in the remainder of the present application with reference to the drawings.

US 6,055,597 describes a bi-directional buffer circuit for transferring data between clock boundaries in a computer system. The circuit is divided into halves, with one half being controlled by a first clock and the second half being controlled by a second clock. The incoming data that is synchronized to the first clock is compiled into data blocks and stored into registers before being synchronized and transferred to the other half of the circuit. The data blockssent across the clock boundary are then synchronized into matched registers within the second half of the circuit.

According to the invention, there are provided a data transition circuit for formatting data as defined by independent claim 1, and a method of formatting data as defined by independent claim 8.

Further advantageous features of the invention are defined in the dependent subclaims.

Aspects of the invention may provide a method and system for formatting data from a first data bus having a first bus width to be compatible with a second data bus having a second bus width. Aspects of the method may include, upon receiving an m-bit input clocked in at a first clock rate from the first data bus, selecting at least a portion of the m-bit input to be provided as an n-bit output of a selector. The selected at least a portion of the m-bit input may be transferred to at least a portion of the n-bit selector output. At least a portion of the n-bit selector output may be loaded into a first-in-first-out (FIFO) buffer at a second clock rate. Finally, at least a portion of the loaded at least a portion of the n-bit selector output may be transferred from the FIFO buffer onto the second data bus at a rate equivalent to second clock rate.

In accordance with the invention, m may be a multiple of n. In this regard, the second clock rate may be at least twice the first clock rate. Alternatively, n may be a multiple of m. In this regard, the first clock rate may be at least twice the second clock rate. The invention may be carried out in a single-chip multimode multi-sublayer PHY device. Accordingly, the selector and/or the FIFO buffer may be integrated within the single-chip multimode multi-sublayer PHY device.

Aspects of the system may include a data transition circuit for formatting data from a first data bus having a first bus width to be compatible with a second data bus having a second bus width. The data transition circuit may include a selector adapted to receive an m-bit input clocked into the selector at a first clock rate from the first data bus. The selector may also be adapted to produce an n-bit output. The selector may include a select signal that may be configured to connect at least a portion of the m-bit input of the selector to the n-bit output of the selector. A FIFO buffer may be coupled to the selector and adapted to buffer the n-bit output of the selector. The selector may be configured so that the n-bit output of the selector may be clocked into the FIFO buffer at a second clock rate. Additionally, the n-bit output of the selector may be clocked out of the FIFO buffer at a second clock rate onto the second data bus.

The data transition circuit may include a select signal that may be adapted to select at least a portion of the m-bit input to be connected to the n-bit output of the selector. In one aspect of the invention, m may be a multiple of n. In this regard, the second clock rate may be at least twice the first clock rate. The select signal may be adapted to select at least a portion of the n-bit input to be connected to the m-bit output. In another aspect of the invention, n may be a multiple of m. In this regard, the first clock rate may be at least twice the second clock rate.

In accordance with the invention, the selector may be integrated within at least a receiver block and/or a transmitter block of a single-chip multimode multi-sublayer PHY device. Additionally, the FIFO buffer may also be integrated within the receiver block and/or the transmitter block of a single-chip multimode multi-sublayer PHY device.

In another embodiment of the invention, a method of formatting data from a first data bus having a first bus width to be compatible with a second data bus having a second bus width may be provided. The method may include the steps of receiving an m-bit input clocked in at a first clock rate from the first data bus and generating, using the m-bit input, an n-bit output. At least a portion of the n-bit output may be loaded into memory at a second clock rate. At least a portion of the n-bit output loaded into the memory, may be transferred from the memory at the second clock rate onto the second data bus. In accordance with the invention, the method memory may be a FIFO buffer. In one aspect of the invention, m may be a multiple of n and the second clock rate may be at least twice the first clock rate. In another aspect of the invention, n may be a multiple of m and the first clock rate may be at least twice the second clock rate.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

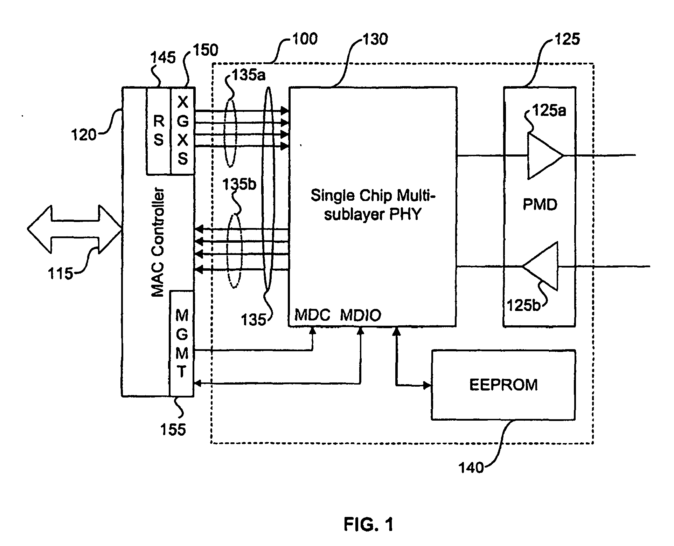

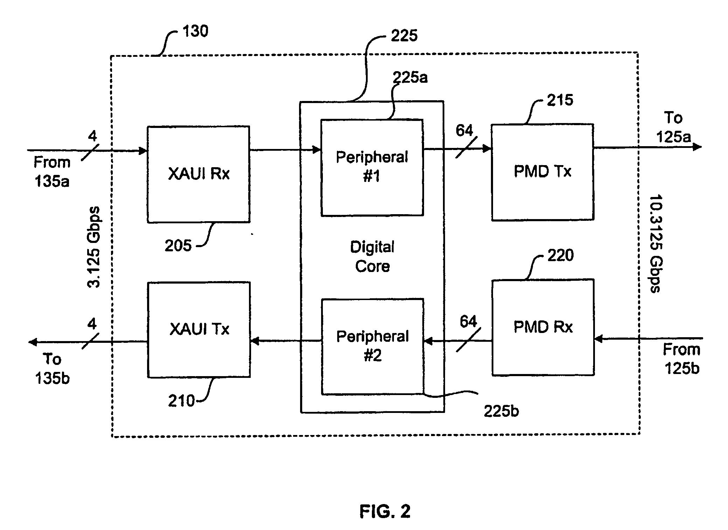

In the following, reference is made to accompanying Figures 1 and 2.

Further, reference is made to Figures 3 - 9 of the related family document US 2004/ 028164 A published on 12.02.2004; i.e. each reference to one of Figures 3 - 9 refers to the corresponding Figure of the family document US 2004/ 028164.
FIG. 1 is a block diagram of an exemplary transceiver module in accordance with an embodiment of the invention.
FIG. 2 is a block diagram of an exemplary single-chip multimode multi-sublayer PHY used in the transceiver module of FIG. 1 in accordance with an embodiment of the invention.
FIG. 3 is a schematic block diagram illustrating an embodiment of the single-chip multimode multi-sublayer PHY of FIG. 2 in accordance with an embodiment of the invention.
FIG. 4 is a block diagram illustrating a typical existing scheme for synchronizing input and output clock signals.
FIG. 5 is a block diagram of an exemplary data transition circuit in accordance with an illustrative embodiment of the invention.
FIG. 6 is a block diagram of an exemplary data transition circuit in accordance with an illustrative embodiment of the present invention.
FIG. 7 is a timing diagram demonstrating one exemplary operation of data transition circuit off FIG. 6.
FIG. 8 is a block diagram of an exemplary data transition circuit in accordance with an illustrative embodiment of the present invention.

### DETAILED DESCRIPTION OF THE INVENTION

FIG. 1 is a block diagram of an exemplary transceiver module 100 in accordance with an embodiment of the invention. Referring to FIG. 1, there is illustrated a computer system 105, a medium access control (MAC) controller 120, a MAC controller interface 115, an optical network 110, a single-chip multimode multi-sublayer PHY device 130, an electrically erasable programmable read only memory (EEPROM) 140, a PMD transmitter 125a and a PMD receiver 125b. PMD transmitter 125a and PMD receiver 125b may be integrated into a single PMD 125 such as a chip or IC, although the invention is not limited in this regard. Transceiver module 100 may be an integrated device, which may include the single-chip multimode multi-sublayer PHY device 130, the EEPROM 140, the optical transmitter 125a and the optical receiver 125b. Computer system 105 may interface with MAC controller 120 through MAC controller interface 115 and may communicate with the optical network 110 through the transceiver module 100. The single-chip multimode multi-sublayer PHY device 130 may also be referred to as a multimode PHY for brevity.

Transceiver module 100 may be configured to communicate, namely transmit and receive, data between computer system 105 and optical network 110. The data transmitted and/or received may be formatted in accordance with the well-known OSI protocol standard. The OSI model partitions operability and functionality into seven distinct and hierarchical layers. Generally, each layer in the OSI model is structured so that it may provide a service to the immediately higher interfacing layer. For example, layer 1 may provide services to layer 2 and layer 2 may provide services to layer 3. The data link layer, layer 2, may include a MAC layer whose functionality may be handled by a MAC controller 120. In this regard, MAC controller 120 may be configured to implement the well-known IEEE 802.3ae Gigabit Ethernet protocol.

In the arrangements of FIG. 1, the computer system 105 may represent layer 3 and above, the MAC controller 120 may represent layer 2 and above and the transceiver module 100 may represent layer 1. The computer system 105 may be configured to build the five highest functional layers for data packets that are to be transmitted over the optical network 110. Since each layer in the OSI model may provide a service to the immediately higher interfacing layer, the MAC controller 120 may provide the necessary services to the computer system 105 to ensure that packets are suitably formatted and communicated to the transceiver module 100. During transmission, each layer may add its own header to the data passed on from the interfacing layer above it. However, during reception, a compatible device having a similar OSI stack may strip off the headers as the message passes from the lower layers up to the higher layers.

The transceiver module 100 may be configured to handle all the physical layer requirements, which may include, but is not limited to, packetization, serialization/deserialization (SERDES) and data transfer. Transceiver module 100 may operate at a plurality of data rates, which may include 10 Gbps. Data packets received by the transceiver module 100 from MAC controller 120 may include data and header information for each of the above six functional layers. The transceiver module 100 may be configured to encode data packets that are to be transmitted over the optical medium of the optical network 110. The transceiver module 100 may also be configured to decode data packets received from the optical network 110.

The MAC controller 120 may interface with the single-chip multimode multi-sublayer PHY 130 of the transceiver module 100 through a 10 Gbps Ethernet attachment unit interface (XAUI) 135. The XAUI 135 may be a low pin count device having a self-clocked bus, which directly evolved from lower data rate protocols. The XAUI may function as an extender interface for a 10 Gigabit media independent interface (XMGII). In this regard, MAC controller 120 may also include an XGMII extender sublayer (XGXS) interface 150 and a reconciliation sublayer (RS) interface 145. MAC controller 120 may include an integrated link management (MGMT) interface 155 that may facilitate communication between MAC controller 120 and a management data input/output (MDIO) interface of the single-chip multi-sublayer PHY 130.

In one aspect of the invention, XAUI 135 may be configured to utilize a plurality of serial data lanes on each of its receive 135a and transmit 135b interfaces to achieve compatible 10 GbE operational speeds. Notably, the XAUI 135 may be configured as two, 4-bit interfaces, each with four serial lines, thereby achieving a throughput of about 10 Gbps. In accordance with the embodiments of FIG. 1, XAUI 135a may be configured to transmit data from the MAC controller 120 to the single-chip multimode multi-sublayer PHY 130. Additionally, XAUI 135b may be configured to transmit data from the single-chip multimode multi-sublayer PHY 130 to the MAC controller 120.

The single-chip multimode multi-sublayer PHY 130 may support multiple modes of operation. In this regard, the single-chip multimode multi-sublayer PHY 130 may be configured to operate in one or more of a plurality of communication modes. Each communication mode may implement a different communication protocol. These communication modes may include, but are not limited to, 10 GbE, fibre channel and other similar protocols. The single-chip multimode multi-sublayer PHY 130 may be configured to operate in a particular mode of operation upon initialization or during operation.

The single-chip multimode multi-sublayer PHY 130 may also include a fully integrated serialization/deserialization device, which may also be configured to operate at speeds of 10 Gbps. During transmission, the single-chip multimode multi-sublayer PHY 130 may serialize the data received over the 4-bit XAUI 135a and transmit the data in a format such as a single 10 Gbps stream via the PMD Tx 125a. During reception, the single-chip multimode multi-sublayer PHY 130 may de-serialize a single 10 Gbps signal received by the PMD Rx 125b and transmit the data in a format such as a 4-bits x 3.125 Gbps datastream over XAUI 135b.

The PMD 125 may include at least one PMD transmitter 125a and at least one PMD receiver 125b. In operation, PMD 125 may be configured to receive data from and transmit data to the optical network 110. The PMD transmitter 125a may transmit data originating from the computer system 105 over the optical network 110. The PMD receiver 125b may receive data destined for computer system 105 from the optical network 110 and transmit the data to the computer system 105. The PMD 125 may also be configured to function as an electro-optical interface. In this regard, electrical signals may be received by PMD transmitter 125a and transmitted in a format such as optical signals over the optical network 110. Additionally, optical signals may be received by PMD receiver 125b and transmitted as electrical signals to the computer system 105. In one aspect of the present invention, for Ethernet operation, the 10 Gigabit data rate may actually be 10.3125 Gbps and for Fibre Channel operation, the 10 Gigabit data rate may actually be 10.516 Gbps, although the invention is not limited in this regard.

The transceiver module 100 may also include an EEPROM 140. The single-chip multimode multi-sublayer PHY 130 may be coupled to EEPROM 140 through an interface such as a serial interface or bus. EEPROM 140 may be programmed with information, which may include parameters, and/or code that may effectuate the operation of the single-chip multimode multi-sublayer PHY 130. The parameters may include configuration data and the code may include operational code such as firmware, although it should be recognized that the information is not limited in this regard.

FIG. 2 is a block diagram of an exemplary single-chip multimode multi-sublayer PHY 130 used in the transceiver module of FIG. 1 in accordance with an embodiment of the invention. Referring now to FIG. 2, the single-chip multimode multi-sublayer PHY 130 may include a XAUI receiver 205, a XAUI transmitter 210, a PMD transmitter 215, and a PMD receiver 220. The single-chip multimode multi-sublayer PHY 130 may further include a digital core 225 which may have one or more peripherals, for example, peripheral #1 225a and peripheral #2 225b. The digital core 225 may include an XGXS PCS sublayer and a PMD PCS sublayer. A XAUI TX/RX sublayer may include the XAUI transmitter 210 and XAUI receiver 205 sections. A PMD TX/RX sublayer may include the PMD transmitter 215 and PMD receiver 220 sections. Various sublayers of the single-chip multimode multi-sublayer PHY 130 may be fabricated in 0.13 micron CMOS technology.

In operation, digital core 225 may be configured to serialize and deserialize (SERDES) received data. Data from the XAUI 135a may be received at XAUI receiver 205, serialized by the digital core 225, and transmitted as a single 10 Gbps datastream by the PMD transmitter 215. This may be considered the transmit path. Data from the optical PMD receiver 125b may be received at PMD receiver 220, deserialized by the digital core 225, and transmitted as, for example, 4-bit x 3.125 Gbps streams by the XAUI receiver 210. This may be considered the receive path.

Fig. 3 of US 2004 028 164 A published on 12th Feb 2004 shows a schematic block diagram illustrating an embodiment of the single-chip multimode multi-sublayer PHY 130 of FIG. 2 in accordance with an embodiment of the invention. This figure may provide a more detailed schematic block diagram of the single-chip multimode multi-sublayer PHY 130 of FIG. 2, which may be used in the transceiver module 100 of FIG. 1. Referring to FIG. 3 of US 2004 028 164 A, the single-chip multimode multi-sublayer PHY 130 may include three main functional blocks. Namely, a transmit block 310, a receive block 340, and a management and control block 370. Clock interfaces may be provided for configuring the XAUI and PMD interfaces for operating in a synchronous mode or an asynchronous mode.

The transmit block 310 may include a clock multiplier unit (CMU) and serializer block 316, a gearbox 328, an encoder scrambler block 326, at least one elastic FIFO 324, one or more lane alignment FIFOs 322, one or more lane detect lane sync decoders 320, and one or more DLL and deserializer 318. The receive block 340 may include a CDR deserializer 348, a gearbox 350, a synchronizer descrambler decoder block 352, at least one elastic FIFO 354, a randomizer 356, one or more encoders 358, one or more serializers 360, and a CMU 346. The management and control block 370 may include a management registers and control interface block 372 and an optics and control status block 374.

In operation, the transmit block 310 may be configured to receive data formatted in a format such as a 4-lane 3 Gigabit data at the XAUI receivers 312 and reformat the received data in a format suitable for 10 Gigabit serial transmission at the PMD differential CML drivers 314. The PMD CMU and serializer 316 in the PMD TX/RX sublayer may be configured to be phase-locked (PL) to a reference clock such as an external reference clock. In one aspect of the invention, each of the XAUI receivers 312 may be configured to handle one lane of received data. In this regard, each of the XAUI receivers 312 in the XAUI TX/RX sublayer may include an internal delayed-lock loop (DLL), which may be adapted to synchronize the sampling clock signal to any incoming data signal.

A PLL is an electronic circuit that may be configured to control a frequency source such as an oscillator, so that it maintains a constant phase angle relative to a reference signal. The reference signal may be extracted from a received signal. PLLs may be used in applications, for example, bit synchronization, symbol synchronization, and coherent carrier tracking. An exemplary digital PLL (DPLL) circuit may include a serial shift register, a phase corrector circuit and a local clock signal. The serial shift register may be configured to receive digital input samples. The digital input samples may be extracted from the received signal. Preferably, the local clock signal may be stable enough to supply clock pulses that may drive the serial shift register. The phase corrector circuit may be adapted to take the local clock signal and regenerate a stable clock signal that may be in phase with the received signal. In this regard, the phase corrector circuit may be configured to slowly adjust the phase of the regenerated clock signal to match the received signal. The regenerated clock signal may be utilized to sample the received data and determine the value of each received bit.

In operation, the received signal may be sampled at the local clock rate. This may generally be a multiple of the nominal regenerated clock frequency such as 32 times. Each sample, whether logic zero (0) or logic one (1), may be shifted into the shift register. The need to adjust the phase may be determined by viewing a set of samples of the received signal. At each regenerated bit period, the shift register may be consulted. If the center of the received bit lies at the center of the shift register, the two clocks may be deemed to be in phase and no compensation or adjustment may be necessary. If the regenerated clock signal lags the reference signal, then the phase adjuster may provide compensation by advancing the regenerated clock. If the regenerated clock signal leads the reference signal, then the phase adjuster may provide compensation by retarding the regenerated clock.

Accordingly, after synchronization, a 3 Gigabit sampling clock signal, for example, may be configured to sample the data signal in the center of a data eye pattern. In this arrangement, a phase relationship between the edge transitions of the data signal and those of the sampling clock signal may be determined and compared by a phase/frequency discriminator. Output pulses from the discriminator may indicate the direction that may be required for adequately correcting a phase of the signal. Additionally, a loop filter may be configured to smooth any pulses that may occur in the signal. An output signal generated by the loop filter may be adapted to control one or more internal phase interpolators, which may be used to generate the sampling clock. The XAUI CMU 316 may be adapted to function as a phase locked loop (PLL) within the XAUI TX/RX sublayer and may be configured to generate clocks for internal DLL phase interpolations.

The single-chip multimode multi-sublayer PHY 130 may include one or more loss-of-signal (LOS) detect circuits. In one embodiment of the invention, the single-chip multimode multi-sublayer PHY 130 may be configured to include a loss-of-signal (LOS) detect circuit for each XAUI DLL within the XAUI TX/RX sublayer. In this regard, the LOS detect circuits may be configured to monitor and detect data presence at the XAUI receiver inputs 312. A minimum single-ended input signal swing may be used for a valid phase lock condition although the invention is not so limited. The status of each individual LOS detector may be determined from one or more bits and/or internal registers of the single-chip multimode multi-sublayer PHY 130.

In one aspect of the present invention, the XAUI serial inputs 312 for the transmit block 310 of the XAUI TX/RX sublayer may be AC-coupled. In this regard, AC coupling may prevent voltage drops across input devices of the single-chip multimode multi-sublayer PHY 130 whenever the input signals may be sourced from a higher operating voltage device. In a case where DC coupling may be used, it may be necessary to ensure that the input signals do not exceed certain V_{DD} levels. Additionally, noise due to overshooting and undershooting of transient currents may also be appropriately handled.

Each XAUI serial data stream for the XAUI serial inputs 312 may be deserialized by one of the DLL and de-serializers 318 integrated within the XAUI TX/RX sublayer. DLL and de-serializers 318 may include one or more serial-to-parallel converters that may be adapted to create, for example, a 10-bit word from the receive serial input data stream. DLL output clocks may be provided and configured to drive the serial-to-parallel converters and/or DLL and de-serializer 318. In normal operation, the DLL may recover the clock from the input data signal. In a case where no data is present, the clock may be recovered from an internal reference clock. In this regard, the output may be sent to the XGXS PCS sublayer in the digital core 225 (FIG. 1).

The XGXS PCS sublayer may include a synchronization (SYNC) sub-block. The sync acquisition sub-block in the XGXS PCS sublayer may be configured to perform code group synchronization, for example, on the incoming 10-bit bytes resulting from the DLL and de-serializer 318. A two-stage 10-bit shift register may be configured to recognize a valid boundary of the input data stream. For example, the two-stage 10-bit shift register may be configured to recognize a /COMMA/ (K28.5) code group, which may be used to indicate a valid data boundary. In this case, upon detection of a single /COMMA/, or other suitable boundary, at least one of the 8B/10B decoders 320 may be enabled. Upon detection of four /COMMA/ code groups without any intervening invalid code group errors, a sync acquisition may be declared.

The 8B/10B decoders 320 may be configured to perform error checks, which may include, but are not limited to, illegal code checks, disparity checks and invalid code checks. In one aspect of the invention, both an illegal code and a running disparity error may cause an invalid code. In this case, an invalid code counter, which may be maintained for performance monitoring, may be incremented. The invalid code counter may be cleared upon a read access or other suitable method. The 8B/10B decoders 320 may also be configured to handle certain decoding tasks within the XGXS PCS sublayer.

A difference between the number of 1's and 0's in a block of data may be characterized as a running disparity (RD). A RD may be regarded as being positive when there are more ones (1s) than zeros (0s) and negative when there are more zeros (0s) than ones (1s). In an exemplary encoding scheme, each encoded 10-bit word may be assigned a RD of 0, +2, or -2, in order to ensure a high bit transition density for reliable clock recovery. Additionally, the RD encoding may be alternated for DC balancing. The balancing may be achieved by maintaining an equal number of ones (1s) and zeros (Os). Upon receipt of an invalid code, a decoder may replace the invalid code with an error code (/E/) K30.7, and may increment the invalid code counter. Upon receipt of a legitimate error code, /E/, one or more of the 8B/10B decoders 320 may pass the error to the XGXS PCS sublayer without incrementing the invalid counter.

Each of the outputs of the 8B/10 decoders 320 may be coupled to a corresponding one of a plurality of lane alignment FIFOs 322. Each lane assignment FIFO 322 may have a corresponding read and write pointer. In operation, at the start of lane alignment by each of, for example, four lane alignment FIFOs 332, the four Lane Alignment FIFO write-pointers within the XGXS PCS sublayer may be enabled upon detection of a boundary, such as an /A/. The FIFOs common read-pointer may be enabled when all four XAUI lanes have detected /A/. Upon detection of an /A/ in one lane without /A/ detections in the other three lanes within a programmable window or skew budget, all FIFOs may be reset, thereby forcing the lane alignment process to start over again. The lane Alignment FIFOs 322 may be adapted to support lane skew compensation of, for example, 5 byte-clocks. Notwithstanding, in accordance with the invention, the single-chip multimode multi-sublayer PHY 130 may permit about 21 external Uls in compliance with the IEEE 802.3ae standard.

The PMD PCS sublayer may utilize a transmission code to improve the transmission characteristics of information, which may be transferred across a communication link. The transmission code may also support transmission of control and data characters. In this regard, the single-chip multimode multi-sublayer PHY 130 may be configured to support 64B/66B encoding as defined by IEEE 802.2ae clause 49 for transmission code. Advantageously, this may ensure the existence of sufficient synchronization information in bit stream to make clock recovery more robust at the receiver.

The output of the lane alignment FIFOs 322 may be coupled to at least one elastic FIFO 324. The output of the at least one elastic FIFO 324 may be coupled to an encoder scrambler block 326. The output of the encoder scrambler block 326 may be coupled to a TX gearbox 328 embedded in the PMD PCS sublayer. The fame synchronizer function of the encoder scrambler block 326 may be configured to encode, for example, a 66-bit frame boundary within the received data. This may permit the fame synchronizer function of the frame synchronizer descrambler decoder block 352 to lock to a 66-bit block using a sync header of the 66-bit frame boundary. In one aspect of the invention, the encoder scrambler block may be configured to encode the blocks of data in accordance with the IEEE 802.3ae specification.

The TX gearbox 328 in the PMD PCS sublayer may be adapted to function as a buffer that may convert, for example, 64-bit data to 66-bit data for more efficient serialization. In one aspect of the invention, the TX gearbox 328 may be configured to receive 64-bit data from the scrambler 344 and a 2-bit sync from a type generator at a frequency such as 156.25 MHz. The TX gearbox 328 may produce a 66-bit data output at a frequency such as 322.265 MHz to the PMD CMU and serializer 316 within the PMD TX/RX sublayer. A register bank may be employed which may be accessed in a circular manner. In this regard, data may be read out of the TX gearbox 328 using an internally generated clock signal such as a 322.265 MHz clock. The data may be converted to a 10 Gigabit serial stream within PMD TX/RX sublayer and driven off-chip by the differential CML outputs 314. In one embodiment of the invention, bit zero (0) of frame zero (0) or the least significant bit (LSB), may be shifted out first. The PMD CMU and serializer 316 within the PMD TX/RX sublayer may have a PLL that may be configured to generate a 10 Gigabit clock by multiplying for example, the internal 156.25 MHz reference clock.

The single chip multimode multi-sublayer PHY 130 may also include a lock detect circuit. The lock detect circuit may be configured to monitor the frequency of any internal VCO. The status of the lock detect may be indicated by one or more bits and/or registers, for example bit zero (0) of an analog transceiver status register (ATSR). A register bit such as a P_LKDTCMU bit may also be configured to transition to a high state whenever the PMD CMU PLL is phase locked. The CMU lock detect signal may also be provided as an output status at the PCMULK pin 348.

The CML serial outputs 314, namely PCOP, PCON, PDOP and PDON may be AC-coupled or DC-coupled. A source voltage of about +1.8V may power the CML outputs 314. Various pins on single-chip multimode multi-sublayer PHY 130 may be configured to provide power to the PCOP, PCON, PDOP and PDON CML serial outputs 314. The PCOP, PCON, PDOP and PDON CML serial outputs 314 may be adapted as high-speed CML outputs that may include a differential pair designed to drive, for example, a 50Ω transmission line. An output driver may be back terminated to, for example, a 50Ω on-chip resistor, in order to provide snubbing of any signal reflections.

Management and control block 370 may include suitable control logic and circuitry for controlling management functions of the single-chip multimode multi-sublayer PHY 130. For example, management registers and control interface block 372 may include one or more registers that may be configured to deactivate the optical transmitter in the optical PMD 125a. Deactivation may be achieved, for example, by transmitting a constant logical low level (0) at the output of PMD 125. A polarity of PDIP, PDIN 344 and PDOP, PDON 342 may be reversed in order to accommodate difficult printed circuit board (PCB) layouts. In this regard, each differential signal pair may have its own polarity control bit in the PMD/Optics Digital Control Register 374.

In accordance with the invention, the single-chip multimode multi-sublayer PHY 130 may comply with the jitter specifications proposed for 10 Gbps Ethernet equipment as defined by IEEE 802.3ae standards. Furthermore, the reference clock characteristics may also be adapted to adhere to this standard although the invention is not so limited.

In operation, receiver block 340 may be configured to receive 10 Gigabit serially formatted PMD data. Upon receipt of the serially formatted data, receiver block 340 may reformat the data for transmission in a suitable format such as a 4-lane 3 Gigabit format by XAUI transmitter 210 (FIG. 2). One of the 3 Gigabit CMU clocks, for example, CMU 346 in the XAUI TX/RX sublayer may be adapted to retune some or all of the XAUI transmitters. The XAUI CMU 346 in the XAUI TX/RX sublayer may be phase-locked to, for example, an external reference clock.

The PMD clock and data recovery (CDR) and serializer 348 within the PMD TX/RX sublayer may be configured to generate a clock signal having, for example, the same frequency as the incoming data bit rate (10 Gigabit rate) at the CML serial data inputs, PDIP and PDIN 344. In this regard, the clock may be phase-aligned by a PLL so that it samples the data in the center of the data eye pattern.

The phase relationship between the edge transitions of the data and those of the generated clock may be compared by a phase/frequency discriminator. In this arrangement, a phase relationship between the edge transitions of the data signal and those of the sampling clock signal may be determined and compared by a phase/frequency discriminator. Output pulses from the discriminator may indicate the direction that may be required for adequately correcting a phase of the signal. Additionally, a loop filter may be configured to smooth any pulses that may occur in the signal. An output signal generated by the loop filter may be adapted to control one or more internal phase interpolators, which may be used to generate the sampling clock. The output of the loop filter may control the frequency of the VCO, which may generate the recovered clock. Frequency stability without incoming data may be guaranteed, for example, by an internal reference clock. In this case, the internal reference clock may provide an appropriate clock to which the PLL may lock whenever there is a loss of data signal.

The single-chip multimode multi-sublayer PHY 130 may also include a lock detect circuit that may be adapted to monitor the 10 Gigabit frequency of any internal VCO within the PMD TX/RX sublayer. In one, embodiment of the invention, the frequency of the incoming data stream may be configured to be within, for example, ±100 ppm of the 10 Gigabit data stream for the lock detector to declare a signal lock. The lock detect status may be indicated by one or more bits and/or registers, for example, bit zero (0) of the ATSR. In this case, the P_LKDTCDR bit may be configured to transition to a high state whenever the PMD CDR is locked to the incoming data. The CDR lock detect signal may also be provided as an output status at the PCDRLK pin 364.

The single-chip multimode multi-sublayer PHY 130 may also include a LOS detect circuit that may be configured to monitor the integrity of the serial receiver data path in the PMD TX/RX sublayer. A peak detector may be configured to look for a minimum amplitude swing in the signal. In a case where there is no serial data input present, a bit such as a LOS_P bit in the ATSR may be set to zero (0). In one aspect of the invention, during operation, the CDR and deserializer block 348 may attempt to lock to the reference clock whenever the signal level falls below a minimum amplitude swing and a bit such as a LOS_B bit may be set accordingly. The LOS from a peak detector condition may also be reflected at the PLOSB output signal pin 350.

The optics control and status block 374 may be adapted to include at least one OPRXLOS pin 376. The OPRXLOS input pin 376 in the optics control and status block 374 may be utilized by an external optical receiver's LOS monitor to indicate when there is loss-of-light condition. The OPRXLOS pin 376, whether directly or in combination with the peak detector logic, may be configured to force the CDR to lock to the reference clock. A polarity of the OPRXLOS pin 376 may be programmable through one or more bits and/or registers. For example, an OPINLVL pin 378 may be adapted to control a OPINLVL bit in a PHY identifier register. In accordance with an embodiment of the invention, the OPINLVL bit may be configured to change the polarity of OPRXLOS pin 376.

The PMD CML serial inputs PDIP, PDIN 344 on the single-chip multimode multi-sublayer PHY 130 may be AC-coupled. Advantageously, AC coupling may prevent voltage drops across input devices of the single-chip multimode sublayer PHY 130 when the input signals are sourced from a higher operating voltage device. In a case where DC coupling is used, it may be pertinent to ensure that input signals do not exceed certain V_{DD} levels. Additionally, it may be necessary to compensate for noise due to overshoot and undershoot transients.

The PMD serial data stream may be deserialized to, for example, a 66-bit word format by, for example, a serial-to-parallel converter in the PMD TX/RX sublayer such as CDR and deserializer block 348. An output CDR and deserializer block 348 may provide a clock signal necessary for operation of the serial-to-parallel converter. Under normal operation, the CDR and deserializer block 348 may be configured to recover the clock from the data signal. If there is no data present, the clock may be recovered from a reference clock such as an internal reference clock. The output of the CDR and deserializer block 348 may be sent to the RX Gearbox 350 within PMD PCS sublayer. The RX Gearbox 350 may be configured to perform an equivalent function, albeit in reverse, as the TX Gearbox 328.

The output of the RX gearbox 350 may be coupled to a frame synchronizer descrambler decoder block 352 embedded in the PMD PCS sublayer. The fame synchronizer function of the frame synchronizer descrambler decoder block 352 may be configured to monitor and detect frame boundaries, for example, a 66-bit frame boundary within the received data. The fame synchronizer function of the frame synchronizer descrambler decoder block 352 may lock to 66-bit blocks using a sync header within the 66-bit frame boundary. Once locked, the outputs of 66-bit data blocks may be determined. The descrambler function of the fame synchronizer descrambler decoder block 352 may be configured to process a payload for the received data. In this regard, the descrambler function of the fame synchronizer descrambler decoder block 352, may utilize the same polynomial employed by the scrambler function of the encoder scrambler block 326, to reverse any effects of scrambling. Subsequently, the decoder function of the fame synchronizer descrambler decoder block 352 may decode the blocks of received data. In one aspect of the invention, the decoder may be configured to decode the blocks of received data in accordance with the IEEE 802.3ae specification.

The output of the fame synchronizer descrambler decoder block 352 may be coupled to an elastic FIFO 354 located within the XGXS sublayer. The output of the elastic FIFO 354 may be coupled to a randomizer 356 located within the XGXS PCS sublayer. Randomizer 356 may be configured to reduce EMI during an inter-packet gap (IPG). At least some of the resultant idle patterns at the XAUI transmitters may be repetitive high-frequency signals, which may be due, for example, to at least some of the 8B/10B encoders. The randomizer 356 may output random a random pattern, such as an /A/K/R/ pattern, in one or more of the data lanes during the IPG. The randomizer 356 may be configured to start its randomization processing on a column of the data containing, for example, an end-of-packet (EOP) byte (T), and end on a SOP. In one aspect of the invention, randomizer 356 may be adapted to utilize the polynomial, 1+x³+x⁷ in compliance with the IEEE 802.3ae Draft 5.0 standard.

The output of the randomizer 356 may be coupled to one or more encoders, for example, 8B/10B encoders 358, located within the XGXS PCS sublayer. The 8B/10B encoders 358 may be adapted so that each of 8B/10B encoders may process a lane of data. In this case, the 8B/10B encoders 358 may be configured to convert a byte-wide data stream of random ones (1s) and zeros (0s) into, for example, a 10-bit DC-balanced serial stream of ones (1s) and zeros (0s). In one aspect of the invention, the DC-balanced serial stream of ones (1s) and zeros (0s) may have a maximum run length of about 6. Sufficient bit transitions may be provided, for example by software, to ensure reliable clock recovery.

Each of the outputs of the 8B/10B encoders may be coupled to an input of one or more serializers 360. In operation, data may be read out of the 8B/10B encoder 358 using for example, an internally generated clock. In one aspect of the invention, the internally generated clock may be configured to have a frequency of about 312.0-MHz clock. The data may then be converted to, for example, a 3 Gigabit serial stream within XAUI TX/RX sublayer and driven off-chip. Output pins XAOP, XAON, XDOP and XDON 362 may be configured to drive the output of serializers 360 off-chip. In one aspect of the invention, bit zero (0) of frame zero (0) or the LSB may be shifted out first and may be mapped to "A" of the 8B/10B encoder 358.

A XAUI CMU 346, which may be located within the XAUI TX/RX sublayer, may include a PLL that may have the capability to generate a clock signal such as the 3 Gigabit clock. For example, XAUI CMU 346 may have the capability of multiplying an internal 156.25 MHz reference clock to generate the 3 Gigabit clock. The single-chip multimode multi-sublayer PHY 130 may also include a lock detect circuit. The lock detect circuit may be configured to monitor a frequency of any internal VCO. In this regard, a CMU lock detect bit may be configured to transition to a high state whenever the XAUI CMU 346 PLL gets locked. The lock detect status may be indicated by one or more bits and/or registers, for example, bit 7 of the ATSR.

The XAUI serial outputs, XAOP, XAON, XDOP, XDON 362 may be AC-coupled CML outputs. In this regard, the XAUI serial outputs, XAOP, XAON, XDOP, XDON 362 CML outputs may be powered by for example, by a +1.2V voltage source. The XAUI serial outputs, XAOP, XAON, XDOP, XDON 362 may be adapted to be high-speed outputs and may include a differential pair designated to drive a 50Ω transmission line. The output driver may be back terminated to 50Ω on-chip resistor, which may provide snubbing of any signal reflections. The output driver may also be configured to possess pre-emphasis capability that may enable it to compensate for frequency selective attenuation of FR-4 traces. Advantageously, this may effectively compensate for any inter symbol interference (ISI) that may occur. The pre-emphasis capability may be controlled by one or more bits and/or registers such as a XAUI pre-emphasis controller register.

In one embodiment of the invention, various interfaces of the single-chip XAUI transmit block 310 and receive block 340 may have the capability to reverse the lane order and/or the lane polarity. Advantageously, XAUI I/O interface lane assignment package pins may be reversed to accommodate difficult PCB layouts. This capability may be controlled via one or more bits or registers such as a XAUI digital control register. In one aspect of the invention, a lane flipper may be configured to perform a byte-wise flip of any internal lane data. This may include, but is not limited to, 32-bit data. By default, lane "A" may be configured to carry byte zero (0), lane "B" may be configured to carry byte one (1), lane "C" may be configured to carry byte two (2), and lane "D" may be configured to carry byte three (3).

In another embodiment of the invention, whenever the lane flipper is enabled, lane "A" may be configured to carry byte three (3), lane "B" may be configured to carry byte two (2), lane "C" may configured to carry byte one (1), and lane "D" may be configured to carry byte zero (0). In this regard, reversal of the lanes may be achieved by setting one or more bits and/or registers. For example, a bit such as a XAUI_TX_FLIP_B and a XAUI_RX_FLIP_B which may be located in a XAUI digital control register in the management registers and control interface block 372, may be set or cleared in order to reverse the XAUI lane order.

In yet a further embodiment of the invention, one or more XAUI I/O interface bit assignment (P to N) to package pins may be reversed in order to accommodate difficult PCB layouts. Assert bits such as a XAUI_TZ_INV and a XAUI_RX_INV bit, which may be located in a XAUI digital control register in the management registers and control interface block 372, may be set or cleared in order to reverse the XAUI lane polarity.

In accordance with the invention, the single-chip multimode multi-sublayer PHY 130 may be configured to support asynchronous clocking mode operation of the XAUI and PMD interfaces. The local reference clock or external transmit VCXO may be adapted to function in accordance with the IEEE specifications. In this regard, one or more elastic FIFO buffers may be configured to be an integral part of the asynchronous operation mode. For example, receive block 340 may include one or more elastic FIFOs 354 and the transmit block 310 may include one or more elastic FIFOs 324. The elastic FIFOs 354, 324 may be configured to accommodate a frequency difference of up to 200 ppm between a recovered clock and a local reference clock. The elastic FIFOs 354, 324 may have read and write pointers, which may be used for data access and manipulation. The Idle columns of data may be inserted or deleted during the IPG once the distance between the elastic FIFO's read and write pointers exceed a given threshold. In accordance with one aspect of the invention, idle columns of four bytes of data may be inserted or deleted during the IPG. In addition, a column of sequence orders may be deleted during the IPG once the distance between the elastic FIFO's read and write pointer exceed a threshold. In accordance with another aspect of the invention, the delete adjustments may occur on IPG streams that contain at least two columns of idles or sequence order sets.

FIG. 4 is a block diagram 400 illustrating a typical existing scheme for synchronizing input and output clock signals. Referring to FIG. 1, there is shown a clock signal CLK1 402, delay buffers 408, 410 and a clock rate multiplier 404. CLK1 402 may function as an input signal, which may be coupled to delay buffers 408 to produce an output signal CLK1 * 412. CLK1 402 may also be coupled to clock rate multiplier 404. The output of the clock rate multiplier 404 may be coupled to delay buffers 410. In this arrangement, an output signal 406 of the clock rate multiplier 404 acts as an input signal to the delay buffers 410. A resultant output signal CLK2 416 may be an output signal from the delay buffers 410.

In operation, clock signal CLK1 402 may be sampled and provided to a clock rate multiplier 404. The clock rate multiplier 404 may be configured to multiply or divide a clock rate of CLK1 402 by a predetermined amount n, to produce the intermediate output clock signal 406. For example, the clock rate of CLK 1 may be multiplied by a factor of two (2) or one-half (½). In this regard, multiplying the clock rate by one-half (½) effectively divides the clock rate of CLK1 402 by a factor of two (2). The delay buffers 408, 406 may be adapted to buffer signals CLK1 402 and 406 respectively, thereby keeping the resulting buffered clock signals CLk1 412 and CLK2 416 in phase.

FIG. 5 is a block diagram 500 of an exemplary data transition circuit 502 in accordance with an illustrative embodiment of the invention. Referring to FIG. 5, there is shown a data input signal 504, a data output signal 506, input clock signals CLK1 508, CLK2 510. Data input signal 504 may have a clock rate of CLK1, which may be communicated over a first data bus having a bus width A. Data output signal 506 may have a clock rate of CLK2, which may be communicated over a second data bus having a bus width B.

In an embodiment of the invention, data transmission circuit 502 may be adapted to reside in the digital core 225 (FIG. 2) of the single-chip multi-sublayer PHY 130. Data transmission circuit 502 may integrated within either the transmit path or the receive path of the digital core 225. In an alternative embodiment, one or more data transition circuits such as data transition circuit 502, may be configured to reside in both the transmit path and the receive path of the digital core 225. During operation, data transition circuit 502 may receive data via the data input 504 at a rate dictated by clock signal CLK1 508. The bus width associated with data input 504 on bus #1 may be 64 bits, although the invention is not limited in this regard. Data transition circuit 502 may be adapted to process the input data signal 504 to produce the output data signal 506, whose clock rate may be dictated by clock signal CLK2 510. The bus width associated with data output 506 on bus #2 may be 128 bits, although the invention is not limited in this regard. The ratio of the CLK2 rate to the CLK1 rate may be inversely proportional to the ratio of the bus width A to bus width B. For example, in a case where bus width A may be 32 bits and bus width B may be 64 bits, the rate of CLK2 may be one-half (½) the rate of CLK1. Similarly, in a case where bus width A may be 32 bits and bus width B may be 8 bits, the rate of CLK2 may be four times the rate of CLK1.

FIG. 6 is a block diagram of an exemplary data transition circuit 600 in accordance with an illustrative embodiment of the present invention. In general, the exemplary data transition circuit 600 may be adapted to implement a data transition from a first bus #1 having a first clock rate CLK1 and a bus width A to a second bus #2 having a clock rate CLK2 and a bus width B. Referring to FIG. 6, there is shown a selector or multiplexer (MUX) 606, a data transition FIFO 608, and plurality of input and output signals. The input and output signals may include, an input data signal 602, an output data signal 604, input clock signals CLK1 610, CLK2 614 and a select signal (SEL) 612. Data input signal 602 may have a clock rate of CLK1, which may be communicated over a first data bus #1 having a bus width A. Data output signal 604 may have a clock rate of CLK2, which may be communicated over a second data bus #2 having a bus width B. CLK1 610, data input signal 602, CLK2 614 and select signal (SEL) 612 may be coupled to the data transition FIFO 608. CLK1 610, select signal (SEL) 612 and output signal 616 from the data transition FIFO 608 may be coupled to the MUX 606 as input signals.

The data transition circuit 600 of FIG. 6 may be illustrative of a data transition circuit that may reside in the receive path of the digital core 225 (FIG. 2). In this regard, the arrangements of FIG. 6 may be configured to implement a transition from, for example, a 64-bit bus #1 to a 32-bit bus #2. In this case, since the bus width A of bus #1 may be twice the bus width B of bus #2, data transition circuit 600 may be adapted to clock data output 604 at a clock rate that is twice the rate at which input data 602 may be clocked into data transition circuit 600 on bus #1. This may result in the data throughput rate for the data output signal 604 on bus #2 being substantially equal to the data throughput rate for the data input signal 602 on bus #1.

In the arrangements of FIG. 6, MUX 606 may be a 64:32 multiplexer, although the invention is not limited in this regard. The rate of data intake into MUX 606 may be controlled by clock signal CLK1 610. The 64-bit output signal 616 of the data transition FIFO 608 may be coupled to an input of MUX 606. The select signal (SEL) 612 of MUX 606 may be adapted to select which 32 bits of the 64-bit data input 616 may be provided to output signal 604 on bus #2. In an exemplary embodiment of the present invention, whenever the select signal (SEL) 612 may be logic one (1), bits 0-31 of signal 616 may be selected to be provided to output signal 604 on bus #2. Additionally, whenever the select signal (SEL) 612 may be at a logic level of zero (0), bits 32-63 of bus #1 may be selected to be provided to output signal 604 on bus #2. The select signal (SEL) 612 may be configured such that it may toggle twice between two data loadings from data transition FIFO 608 to MUX 606. In this regard, MUX 606 may be adapted to alternate between sending out a first set of 32 bits, and then sending out a second remaining set of 32 bits, for example bits 32-63, to the output signal 604 on bus #2. The throughput of the data transition FIFO 608 may be controlled by select signal (SEL) 612, which may have the same rate as that of CLK1 610.

FIG. 7 is a timing diagram demonstrating one exemplary operation of data transition circuit 600 of FIG. 6. Referring to FIG. 7, there is shown CLK signals CLK1 710, CLK2 720 and select signal (SEL) 730. CLK2 signal 720 may have at least a different phase from the CLK1 signal 710. The select signal (SEL) 730 may be generated by CLK2 such that there may be a delay t_{ckq} with regards to corresponding reference points of CLK2 and the select signal (SEL) 730. At time instant t₁, CLK1 signal 710 may transition from logic zero (0) to logic one (1), thereby causing 64 bits of input data 602 to be loaded into the data transition FIFO 608 from bus #1. At time instant t₂, CLK2 signal 720 may transition from logic zero (0) to logic one (1) with select signal (SEL) 730 being logic zero (0), thereby causing the 64 bits of the earliest loaded existing data in the transition FIFO 608, to be loaded into the MUX 606. At time instant t_{2',} the select signal (SEL) 730 may transition from logic zero (0) to logic one (1) and this may be adapted to cause at least a portion of the 64 bits, for example bits 0-31, in the MUX 606 to be loaded onto bus #2. At time instant t₃, CLK2 720 may transition from logic zero (0) to logic one (1), while the select signal (SEL) 730 remains at logic one(1), thereby causing the 64-bit data in the bus 616 to remain unchanged . At time instant t₃, while the CLK2 signal remains high, the select signal (SEL) 730 toggles to logic zero (0), thereby causing a remaining portion of the bits in the bus 616, for example bits 32-63, to be loaded onto bus #2.

In accordance with another aspect of the invention, the FIFO 608 may be adapted for use in a cross clock domain. For example, at t₁,when the SEL signal 730 may be high, de-multiplexed data may be written into the FIFO 808. Several clocks cycles later, depending on the FIFO's depth, at some subsequent time instant, for example t₇, data may be read out of the FIFO 608 on the rising edge of CLK2 while select signal (SEL) 730 may be logic zero (0). Data transition circuit 600 may continue operating in the above-described manner by loading corresponding portions of the input data 602 from bus A onto bus B. Accordingly, the data transition circuit 600 may be adapted to provide data bus bandwidth conversion, and corresponding data clocking rate conversion, without a need to synchronize the two clock signals involved.

FIG. 8 is a block diagram of an exemplary data transition circuit 800 in accordance with an illustrative embodiment of the present invention. Referring to FIG. 8, there is shown a selector or de-multiplexer (DEMUX) 806, a data transition FIFO 808, and a plurality of input and output signals. The input and output signals may include, an input data signal 802, an output data signal 804, input clock signals CLK1 810, CLK2 814 and a select signal (SEL) 812. Data input signal 802 may have a clock rate of CLK1, which may be communicated over a first data bus #1 having a bus width A. Data output signal 804 may have a clock rate of CLK2, which may be communicated over a second data bus #2 having a bus width B. CLK1 810, data input signal 802 and select signal (SEL) 812 may be coupled to the DEMUX 806. CLK2 814 and output signal 816 from the MUX 806 may be coupled to the data transition FIFO 808 as input signals.

The selector or DEMUX 806 may include multiplexers (MUX) 822, 824 and D type flip-flops (D-FFs) 826, 828. Select signal (SEL) 812 may be coupled to a select input of each of the multiplexers 822, 824. The CLK1 signal 810 may be coupled as an input to a CLK input of each of the D-FF 826, 828. The output of each of the multiplexers 822, 824 may be coupled to a D-input of each of the D-FFs 826, 828 respectively. In this configuration, the multiplexers 822, 824 may alternately select between at least a portion of the data input signal 802 and at least a remaining portion of the input data signal 802, which may be placed on bus 816.

The data transition circuit 800 of FIG. 8 may be illustrative of a data transition circuit that may reside in the receive path of the digital core 225 (FIG. 2). In this regard, the arrangements of FIG. 8 may be configured to implement a transition from, for example, a 32-bit bus #1 to a 64-bit bus #2. In this case, since the width of bus #2 may be twice the bus width of bus #1, data transition circuit 800 may be adapted to clock data output 804 at a clock rate that may be one-half (½) the rate at which input data 802 may be clocked into data transition circuit 800 on bus A. This may result in the data throughput rate for the data output signal 804 on bus #2 being substantially equal to the data throughput rate for the data input signal 802 on bus #1.

In the arrangements of FIG. 8, DEMUX 808 may be a 32:64 demultiplexer, although the invention is not limited in this regard. The rate of data intake into DEMUX 806 may be controlled by clock signal CLK1 810. The 64-bit output of DEMUX 806 may be coupled to data transition FIFO 808. The select signal (SEL) 812 of DEMUX 806 may be adapted to select which 32 bits positions of the data output signal 804 will be occupied by the 32 bits comprising the data input signal 802. In an exemplary embodiment of the present invention, whenever the select signal (SEL) 812 may be at a logic level of zero (0), bits 0-31 of bus #1 may be selected for loading into D-FF 828 of the lower 32 bits, namely bits 0-31 of bus 816. Additionally, whenever the select signal 812 may be at a logic level of one (1), bits 0-31 of bus #1 may be selected for loading into the D-FF 826 of the upper 32 bits, namely bits 32-63 of bus 816. The select signal (SEL) 812 may be configured such that it may toggle twice between two loadings of data from bus 816 into data transition FIFO 808. In this regard, when select signal (SEL) is logic zero (0), the data is loaded into data transition FIFO 808. The throughput of the data transition FIFO 808 may be controlled by clock signal CLK2 814, which may have a clock rate that may be one-half (½) that of CLK1 810.

FIG. 9 is a timing diagram demonstrating one exemplary operation of the data transition circuit 800 of FIG. 8. Referring to FIG. 9, there is shown CLK signals CLK1 910, CLK2 920, and select signal (SEL) 930. The select signal (SEL) 930 may be generated by CLK1 such that there may be a delay t_{ckq} with regards to corresponding reference points of CLK1 and the select signal (SEL) 930. At time instant t₁, CLK1 signal 910 may transition from a logic zero (0) to a logic one (1), while the select signal (SEL) 930 may be a logic zero (0), thereby causing 32 bits of data input signal 802 to be loaded into D-FF 828 of DEMUX 806 from input bus A. At this time, because the select signal (SEL) 930 may be logic zero (0), the 64 bit data on the bus 816 may also be loaded into data transition FIFO 808. At time instant t₂, CLK2 signal 820 may transition from logic zero (0) to logic one (1), thereby causing 64 bits of earliest loaded existing data in the data transition FIFO 808 to be read out from the data transition FIFO 808.

At time instant t₃, CLK1 910 may transition from logic zero (0) to logic one (1), while SEL 930 is logic one (1), thereby causing all 32 bits of input data signal 802, to be loaded into D-FF 826 of DEMUX 806. At this time, because SEL 930 may be logic one (1), the 64 bit data on the bus 816 may not be loaded into DATA transition FIFO 816. At time instant t₄, CLK1 910 may transition from logic zero (0) to a logic one (1), while select signal (SEL) 930 may remain logic zero (0), thereby causing 64 bits of bus 816 to be loaded into data transition FIFO 808. At time instant t₅, CLK2 920 may transition from logic zero (0) to logic one (1), thereby causing the earliest loaded existing 64 bits of data in the data transition FIFO 808 to be transferred onto bus B in data output signal 804.

At time instant t₆, CLK1 signal 910 may transition from a logic zero (0) to a logic one (1), while the select signal (SEL) 930 may be a logic zero (0), thereby causing 32 bits of data input signal 802 to be loaded into D-FF 828 of DEMUX 806 from input bus A. At this time, because the select signal (SEL) 930 may be logic zero (0), the 64 bit data on the bus 816 may also be loaded into data transition FIFO 808. At time instant t₇, CLK2 signal 820 may transition from logic zero (0) to logic one (1), thereby causing 64 bits of earliest loaded existing data in the data transition FIFO 808 to be read out from the data transition FIFO 808.

At time instant t₈, CLK1 910 may transition from logic zero (0) to logic one (1), while SEL 930 is logic one (1), thereby causing all 32 bits of input data signal 802, to be loaded into D-FFs 826 of DEMUX 806. At this time, because SEL 930 may be logic one (1), the 64 bit data on the bus 816 may not be loaded into DATA transition FIFO 816. At time instant t₉, CLK1 910 may transition from logic zero (0) to a logic one (1), while select signal (SEL) 930 may remain logic zero (0), thereby causing 64 bits of bus 816 to be loaded into data transition FIFO 808. At time instant t₁₀, CLK2 920 may transition from logic zero (0) to logic one (1), thereby causing the earliest loaded existing 64 bits of data in the data transition FIFO 808 to be transferred onto bus B in data output signal 804.

In accordance with another aspect of the invention, the data transition FIFO 808 may be adapted for use in a cross clock domain. For example, at t₁, when the select signal (SEL) 930 may be low, de-multiplexed data may be written into the data transition FIFO 808. Several clocks cycles later, depending on a depth of the data transition FIFO's, at some subsequent time instant, for example t₁₁, the data may be read out of the data transition FIFO 808 on the rising edge of CLK2. DEMUX 806 may continue operating in the above-described manner by consecutively aligning 32-bit input words into the upper 32 bits and lower 32 bits of a 64-bit word. The 64-bit word may subsequently be loaded onto bus B as signal 804 by data transition FIFO 808. The data transition circuit 800 may be adapted to provide data bus bandwidth conversion and corresponding data clock rate conversion, without a need to synchronize the two clock signals involved. Advantageously, aspects of the present invention permit a system that may not require an enable signal for initiating data transition.

Accordingly, the present invention may be realized in hardware, software, or a combination of hardware and software. The present invention may be realized in a centralized fashion in one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention also may be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from the scope of the appended claims.

## Claims

1. A data transition circuit (502, 600, 800) for formatting data from a first data bus (#1) having a first bus width (A) to be compatible with a second data bus (#2) having a second bus width (A), the circuit (502, 600, 800) comprising:
a selector (606, 806) adapted to receive an m-bit input (504, 602, 802) clocked into said selector (606, 806) at a first clock rate (CLK1, 610, 710, 810, 910) from the first data bus (#1) and to produce an n-bit output (506, 604, 804), said selector (606, 806) comprising a select signal (SEL, 612, 730, 812, 930) configured to connect at least a portion of said m-bit input (504, 602, 802) to said n-bit output (506, 604, 804); and
a first-in-first-out (FIFO) buffer (608, 808) coupled to said selector (606, 806) and adapted to buffer said n-bit output (506, 604, 804) of said selector (606, 806), said n-bit output (506, 604, 804) of said selector (606, 806) clocked into and out of said FIFO buffer (608, 808) at a second clock rate (CLK2, 614, 720, 814, 920) onto the second data bus (#2).

2. The data transition circuit (502, 600, 800) according to claim 1, wherein said select signal (SEL, 612, 730, 812, 930) is adapted to select at least a portion of said m-bit input (504, 602, 802) to be connected to said n-bit output (506, 604, 804) of said selector (606, 806).

3. The data transition circuit (502, 600, 800) according to claim 2, wherein m is a multiple of n.

4. The data transition circuit (502, 600, 800) according to claim 1, wherein said select signal (SEL, 612, 730, 812, 930) is adapted to select at least a portion of said m-bit input (504, 602, 802) to be connected to said n-bit output (506, 604, 804) of said selector (606, 806).

5. The data transition circuit (502, 600, 800) according to claim 2, wherein n is a multiple of m.

6. The data transition circuit (502, 600, 800) of claim 6, wherein said selector (606, 806) is integrated within at least one of a receiver block (125b, 340) and a transmitter (125a) block of a single-chip multimode multi-sublayer PHY device (130).

7. The data transition circuit (502, 600, 800) of claim 1, wherein said FIFO buffer (608, 808) is integrated within at least one of a receiver block (205, 220, 340) and a transmitter block (210, 215) of a single-chip multimode multi-sublayer PHY device (130).

8. A method of formatting data from a first data bus (#1) having a first bus width (A) to be compatible with a second data bus (#2) having a second bus width (B), the method comprising:
receiving an m-bit input (504, 602, 802) clocked in at a first clock rate (CLK1, 610, 710, 810, 910) from the first data bus (#1);
generating, using said m-bit input (504, 602, 802), an n-bit output (506, 604, 804);
loading at least a portion of said n-bit output (506, 604, 804) into memory at a second clock rate (CLK2, 614, 720, 814, 920); and
transferring at least a portion of said n-bit output (506, 604, 804) loaded into said memory, from said memory at said second clock rate (CLK2, 614, 720, 814, 920) onto the second data bus (#2).

9. The method according to claim 8, wherein said memory is a FIFO buffer (608, 808).

10. The method according to claim 8, wherein m is a multiple of n.

11. The method according to claim 10, wherein said second clock rate (CLK2, 614, 720, 814, 920) is at least twice said first clock rate (CLK1, 610, 710, 810, 910).

12. The method according to claim 8, wherein n is a multiple of m.

13. The method according to claim 12, wherein said first clock rate (CLK1, 610, 710, 810, 910) is at least twice said second clock rate (CLK2, 614, 720, 814, 920).

14. The method according to one of the preceding claims, wherein upon receiving said m-bit input (504, 602, 802) clocked in at a first clock rate (CLK1, 610, 710, 810, 910) from the first data bus (#1), selecting at least a portion of said m-bit input (504, 602, 802) to be provided as an n-bit output (506, 604, 804) of a selector (606, 806);
transferring said selected at least a portion of said m-bit input (504, 602, 802) to at least a portion of said n-bit selector output (506, 604, 804);
loading said at least a portion of said n-bit selector output (506, 604, 804) into a first-in-first-out (FIFO) buffer (608, 808) at a second clock rate (CLK2, 614, 720, 814, 920); and
transferring at least a portion of said loaded at least a portion of said n-bit selector output (506, 604, 804) from said FIFO buffer (608, 808) at said second clock rate (CLK2, 614, 720, 814, 920) onto the second data bus (#2).

## Patentansprüche

1. Datenübergangsschaltung (502, 600, 800) zum Formatieren von Daten von einem ersten Datenbus (#1) mit einer ersten Busbreite (A) derart, dass sie mit einem zweiten Datenbus (#2) mit einer zweiten Busbreite (B) kompatibel sind, wobei die Schaltung (502, 600, 800) umfasst:
- einen Selektor (Auswahleinrichtung) (606, 806), der dafür ausgelegt ist, einen m-Bit-Eingang (504, 602, 802) zu empfangen, der von dem ersten Datenbus (#1) mit einer ersten Taktrate (CLK1, 610, 710, 810, 910) in den Selektor (606, 806) eingelesen wird, und einen n-Bit-Ausgang (506, 604, 804) zu erzeugen, wobei der Selektor (606, 806) ein Auswahlsignal (SEL, 612, 730, 812, 930) umfasst, das dafür konfiguriert ist, wenigstens einen Teil des m-Bit-Eingangs (504, 602, 802) mit dem n-Bit-Ausgang (506, 604, 804) zu verbinden, und
- einen First-In-First-Out- (FIFO-) Puffer (608, 808), der mit dem Selektor (606, 806) gekoppelt und dafür ausgelegt ist, den n-Bit-Ausgang (506, 604, 804) des Selektors (606, 806) zwischenzuspeichern, wobei der n-Bit-Ausgang (506, 604, 804) des Selektors (606, 806) mit einer zweiten Taktrate (CLK2, 614, 720, 814, 920) in den FIFO-Puffer (608, 808) eingelesen und mit der zweiten Taktrate aus diesem auf den zweiten Datenbus (#2) ausgelesen wird.

2. Datenübergangsschaltung (502, 600, 800) nach Anspruch 1,
wobei das Auswahlsignal (SEL, 612, 730, 812, 930) dafür ausgelegt ist, wenigstens einen Teil des m-Bit-Eingangs (504, 602, 802) auszuwählen, der mit dem n-Bit-Ausgang (506, 604, 804) des Selektors (606, 806) verbunden werden soll.

3. Datenübergangsschaltung (502, 600, 800) nach Anspruch 2,
wobei m ein Vielfaches von n ist.

4. Datenübergangsschaltung (502, 600, 800) nach Anspruch 1,
wobei das Auswahlsignal (SEL, 612, 730, 812, 930) dafür ausgelegt ist, wenigstens einen Teil des m-Bit-Eingangs (504, 602, 802) auszuwählen, der mit dem n-Bit-Ausgang (506, 604, 804) des Selektors (606, 806) verbunden werden soll.

5. Datenübergangsschaltung (502, 600, 800) nach Anspruch 2,
wobei n ein Vielfaches von m ist.

6. Datenübergangsschaltung (502, 600, 800) nach Anspruch 1,
wobei der Selektor (606, 806) in einen Empfängerblock (125b, 340) und/oder einen Senderblock (125a) einer mehrere Teilschichten umfassenden Ein-Chip-Multimodus-Bitübertragungsschichteinrichtung (PHY-Einrichtung) (130) integriert ist.

7. Datenübergangsschaltung (502, 600, 800) nach Anspruch 1,
wobei der FIFO-Puffer (608, 808) in einen Empfängerblock (205, 220, 340) und/oder einen Senderblock (210, 215) einer mehrere Teilschichten umfassenden Ein-Chip-Multimodus-Bitübertragungsschichteinrichtung (PHY-Einrichtung) (130) integriert ist.

8. Verfahren zum Formatieren von Daten von einem ersten Datenbus (#1) mit einer ersten Busbreite (A) derart, dass sie mit einem zweiten Datenbus (#2) mit einer zweiten Busbreite (B) kompatibel sind, wobei das Verfahren umfasst:
- Empfangen eines m-Bit-Eingangs (504, 602, 802), der von dem ersten Datenbus (#1) mit einer ersten Taktrate (CLK1, 610, 710, 810, 910) eingelesen wird,
- Erzeugen eines n-Bit-Ausgangs (506, 604, 804) unter Verwendung des m-Bit-Eingangs (504, 602, 802),
- Laden wenigstens eines Teils des n-Bit-Ausgangs (506, 604, 804) in einen Speicher mit einer zweiten Taktrate (CLK2, 614, 720, 814, 920), und
- Übertragen wenigstens eines Teils des in den Speicher geladenen n-Bit-Ausgangs (506, 604, 804) mit einer zweiten Taktrate (CLK2, 614, 720, 814, 920) aus dem Speicher auf den zweiten Datenbus (#2).

9. Verfahren nach Anspruch 8,
wobei der Speicher ein FIFO-Puffer (608, 808) ist.

10. Verfahren nach Anspruch 8,
wobei m ein Vielfaches von n ist.

11. Verfahren nach Anspruch 10,
wobei die zweite Taktrate (CLK2, 614, 720, 814, 920) mindestens das Doppelte der ersten Taktrate (CLK1, 610, 710, 810, 910) beträgt.

12. Verfahren nach Anspruch 8,
wobei n ein Vielfaches von m ist.

13. Verfahren nach Anspruch 12,
wobei die erste Taktrate (CLK1, 610, 710, 810, 910) mindestens das Doppelte der zweiten Taktrate (CLK2, 614, 720, 814, 920) beträgt.

14. Verfahren nach einem der vorhergehenden Ansprüche,
wobei bei Empfang des m-Bit-Eingangs (504, 602, 802), der vom ersten Datenbus (#1) mit einer ersten Taktrate (CLK1, 610, 710, 810, 910) eingelesen wird, wenigstens ein Teil des m-Bit-Eingangs (504, 602, 802) ausgewählt wird, der als n-Bit-Ausgang (506, 604, 804) eines Selektors (606, 806) bereitgestellt werden soll,
- Übertragen des ausgewählten, wenigstens einen Teils des m-Bit-Eingangs (504, 602, 802) an wenigstens einen Teil des n-Bit-Selektorausgangs (506, 604, 804),
- Laden des wenigstens einen Teil des n-Bit-Selektorausgangs (506, 604, 804) in einen ersten First-In-First-Out- (FIFO-) Puffer (608, 808) mit einer zweiten Taktrate (CLK2, 614, 720, 814, 920), und
- Übertragen wenigstens eines Teils des geladenen wenigstens einen Teils des n-Bit-Selektorausgangs (506, 604, 804) mit der zweiten Taktrate (CLK2, 614, 720, 814, 920) von dem FIFO-Puffer (608, 808) auf den zweiten Datenbus (#2).

## Revendications

1. Circuit de transition de données (502, 600, 800) permettant de formater des données provenant d'un premier bus de données (#1) ayant une première largeur de bus (A) pour qu'elles soient compatibles avec un second bus de données (#2) ayant une seconde largeur de bus (A), le circuit (502, 600, 800) comprenant :
un sélecteur (606, 806) conçu pour recevoir une entrée de m bits (504, 602, 802) transférée dans ledit sélecteur (606, 806), à une première fréquence d'horloge (CLK1, 610, 710, 810, 910) à partir du premier bus de données (#1) et pour produire une sortie de n bits (506, 604, 804), ledit sélecteur (606, 806) comprenant un signal de sélection (SEL, 612, 730, 812, 930) configuré pour connecter au moins une partie de ladite entrée de m bits (504, 602, 802) à ladite sortie de n bits (506, 604, 804) ; et
une mémoire tampon du type premier entré, premier sorti, dite mémoire tampon FIFO (608, 808), couplée audit sélecteur (606, 806) et conçue pour mettre en mémoire tampon ladite sortie de n bits (506, 604, 804) dudit sélecteur (606, 806), ladite sortie de n bits (506, 604, 804) dudit sélecteur (606, 806) étant transférée dans ladite mémoire tampon FIFO (608, 808) et à partir de celle-ci, à une seconde fréquence d'horloge (CLK2, 614, 720, 814, 920) sur le second bus de données (#2).

2. Circuit de transition de données (502, 600, 800) selon la revendication 1, dans lequel ledit signal de sélection (SEL, 612, 730, 812, 930) est destiné à sélectionner au moins une partie de ladite entrée de m bits (504, 602, 802) à connecter à ladite sortie de n bits (506, 604, 804) dudit sélecteur (606, 806).

3. Circuit de transition de données (502, 600, 800) selon la revendication 2, dans lequel m est un multiple de n.

4. Circuit de transition de données (502, 600, 800) selon la revendication 1, dans lequel ledit signal de sélection (SEL, 612, 730, 812, 930) est destiné à sélectionner au moins une partie de ladite entrée de m bits (504, 602, 802) à connecter à ladite sortie de n bits (506, 604, 804) dudit sélecteur (606, 806).

5. Circuit de transition de données (502, 600, 800) selon la revendication 2, dans lequel n est un multiple de m.

6. Circuit de transition de données (502, 600, 800) selon la revendication 1, dans lequel ledit sélecteur (606, 806) est intégré à l'intérieur d'au moins un bloc récepteur (125b, 340) ou un bloc émetteur (125a) d'un dispositif à sous-couches multiples, multimode et monopuce PHY (130).

7. Circuit de transition de données (502, 600, 800) selon la revendication 1, dans lequel ladite mémoire tampon FIFO (608, 808) est intégrée à l'intérieur d'au moins un bloc récepteur (205, 220, 340) ou un bloc émetteur (210, 215) d'un dispositif à sous-couches multiples, multimode et monopuce PHY (130).

8. Procédé de formatage de données provenant d'un premier bus de données (#1) ayant une première largeur de bus (A) pour qu'elles soient compatibles avec un second bus de données (#2) ayant une seconde largeur de bus (B), le procédé comprenant :
la réception d'une entrée de m bits (504, 602, 802) transférée à une première fréquence d'horloge (CLK1, 610, 710, 810, 910) à partir du premier bus de données (#1) ;
la génération, à l'aide de ladite entrée de m bits (504, 602, 802), d'une sortie de n bits (506, 604, 804) ;
le chargement d'au moins une partie de ladite sortie de n bits (506, 604, 804) dans une mémoire, à une seconde fréquence d'horloge (CLK2, 614, 720, 814, 920) ; et
le transfert d'au moins une partie de ladite sortie de n bits (506, 604, 804) chargée dans ladite mémoire, à partir de ladite mémoire, à ladite seconde fréquence d'horloge (CLK2, 614, 720, 814, 920), sur le second bus de données (#2).

9. Procédé selon la revendication 8, dans lequel ladite mémoire est une mémoire tampon de type premier entré, premier sorti, dite mémoire tampon FIFO (608, 808).

10. Procédé selon la revendication 8, dans lequel m est un multiple de n.

11. Procédé selon la revendication 10, dans lequel ladite seconde fréquence d'horloge (CLK2, 614, 720, 814, 920) est au moins égale au double de ladite première fréquence d'horloge (CLK1, 610, 710, 810, 910).

12. Procédé selon la revendication 8, dans lequel n est un multiple de m.

13. Procédé selon la revendication 12, dans lequel ladite première fréquence d'horloge (CLK1, 610, 710, 810, 910) est au moins égale au double de ladite seconde fréquence d'horloge (CLK2, 614, 720, 814, 920).

14. Procédé selon l'une quelconque des revendications précédentes, comprenant en outre :
lors de la réception de ladite entrée de m bits (504, 602, 802) transférée à une première fréquence d'horloge (CLK1, 610, 710, 810, 910) à partir du premier bus de données (#1), la sélection d'au moins une partie de ladite entrée de m bits (504, 602, 802) à fournir en tant que sortie de n bits (506, 604, 804) d'un sélecteur (606, 806) ;
le transfert de ladite au moins une partie sélectionnée de ladite entrée de m bits (504, 602, 802) vers au moins une partie de ladite sortie de n bits de sélecteur (506, 604, 804) ;
le chargement de ladite au moins une partie de ladite sortie de n bits de sélecteur (506, 604, 804) dans une mémoire tampon FIFO (608, 808), à une seconde fréquence d'horloge (CLK2, 614, 720, 814, 920) ; et
le transfert d'au moins une partie de ladite au moins une partie chargée de ladite sortie de n bits de sélecteur (506, 604, 804) à partir de ladite mémoire tampon FIFO (608, 808), à ladite seconde fréquence d'horloge (CLK2, 614, 720, 814, 920), sur ledit second bus de données (#2).
